(19) **Europäisches Patentamt**
**European Patent Office**
**Office européen des brevets**

(11) **EP 2 134 557 B1**

(12) **FASCICULE DE BREVET EUROPEEN**

(45) Date de publication et mention de la délivrance du brevet:
**30.03.2016 Bulletin 2016/13**

(51) Int Cl.:
***B60J 1/20*** *(2006.01)*      ***B60J 1/00*** *(2006.01)*
***B60R 13/08*** *(2006.01)*      ***E06B 5/20*** *(2006.01)*
***F16F 9/30*** *(2006.01)*

(21) Numéro de dépôt: **08788097.7**

(22) Date de dépôt: **01.04.2008**

(86) Numéro de dépôt international:
**PCT/FR2008/050571**

(87) Numéro de publication internationale:
**WO 2008/139082 (20.11.2008 Gazette 2008/47)**

(54) **VITRAGE A PROPRIETE D'AMORTISSEMENT VIBRO-ACOUSTIQUE AMELIORE, PROCEDE DE FABRICATION D'UN TEL VITRAGE ET PROCEDE DE PROTECTION ACOUSTIQUE DANS UN HABITACLE DE VEHICULE**

VERGLASUNG MIT VERBESSERTEN VIBROAKUSTISCHEN DÄMPFUNGSEIGENSCHAFTEN, VERFAHREN ZUR HERSTELLUNG EINER DERARTIGEN VERGLASUNG UND SCHALLSCHUTZVERFAHREN FÜR DEN INSASSENRAUM EINES FAHRZEUGES

GLAZING WITH IMPROVED VIBRO-ACOUSTIC DAMPING PROPERTIES, METHOD FOR MAKING SUCH GLAZING AND METHOD FOR ACOUSTIC PROTECTION IN A VEHICLE PASSENGER COMPARTMENT

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **06.04.2007 FR 0754361**

(43) Date de publication de la demande:
**23.12.2009 Bulletin 2009/52**

(73) Titulaire: **Saint-Gobain Glass France**
**92400 Courbevoie (FR)**

(72) Inventeurs:
• **PAYOT, Sylvain**
**F-60200 Compiegne (FR)**
• **FOURNIER, David**
**60120 Breteuil (FR)**
• **REHFELD, Marc**
**F-95460 Ezanville (FR)**

(74) Mandataire: **Lucas, Francois**
**SAINT-GOBAIN RECHERCHE**
**Département Propriété Industrielle**
**39, Quai Lucien Lefranc**
**93300 Aubervilliers (FR)**

(56) Documents cités:
**EP-A- 1 693 190**      **EP-A1- 0 387 148**
**WO-A-2004/012952**      **DE-A1- 3 617 602**
**DE-A1- 10 337 007**      **FR-A- 2 877 881**
**US-A- 4 490 942**      **US-A- 4 776 132**

**Description**

La présente invention concerne un vitrage à propriété d'amortissement vibro-acoustique améliorée qui comporte un dispositif d'amortissement vibro-acoustique, ainsi qu'un procédé de réduction de la gêne acoustique et vibratoire dans un habitacle, en particulier un habitacle mobile tel qu'un véhicule, notamment un véhicule automobile.

Outre les véhicules automobiles ou autres types de véhicules tels que les camions, cars, matériels agricoles, l'invention s'applique à tous types d'engins de locomotion présentant un habitacle fermé ou sensiblement fermé, tels que les avions, les trains, les bateaux , les sous-marins...

Les vitrages associés aux véhicules, notamment les véhicules automobiles, sont pourvus de moyens d'amortissement vibro-acoustique qui servent à absorber les ondes vibratoires se propageant au travers du vitrage en vue d'améliorer le confort acoustique à l'intérieur des véhicules.

Dans un véhicule automobile, les sources de désagrément d'origine mécanique, thermique, de visibilité, etc... ont été peu à peu maîtrisées. Mais l'amélioration du confort acoustique reste toujours d'actualité.

Les bruits d'origine aérodynamique, c'est-à-dire créés par le frottement de l'air sur le véhicule en déplacement, ont pu, au moins en partie, être eux-mêmes traités à leur source : pour économiser l'énergie, les formes ont été modifiées en améliorant la pénétration dans l'air et en diminuant les turbulences qui sont elles-mêmes source de bruits. Parmi les parois d'un véhicule qui séparent la source de bruits aérodynamiques extérieure de l'espace intérieur où se trouve le passager, les vitrages sont évidemment les plus difficiles à traiter.

L'objet du document DE103 37 007 est de fournir un amortisseur vibroacoustique efficace pour véhicules automobiles, qui soit facile à fabriquer et peu coûteux. Ce document décrit un élément de renforcement insonorisant, notamment pour le toit d'un véhicule, formé par un profilé creux de recouvrement, longitudinal, relié à une partie de carrosserie par l'intermédiaire d'une couche intermédiaire d'amortissement.

Le document FR2877881 concerne la réduction du niveau vibratoire des pare-brises et lunettes arrières de véhicule grâce à une couche de matériau visco-élastique, interposée entre la vitre et la carrosserie du véhicule. Ce matériau visco-élastique a un facteur de perte supérieur ou égal à 0,7 et un module d'élastique de cisaillement inférieur à 3 MPa dans une plage de températures de 10 à 40°C et sous une excitation vibratoire entre 20 et 500 Hz.

Il est à présent connu de proposer des vitrages feuilletés dont l'intercalaire en matière thermoplastique est choisi de manière adaptée pour présenter des propriétés améliorées d'amortissement vibro-acoustique.

Le brevet européen EP-B1-0 387 148 propose ainsi des vitrages feuilletés qui réalisent une bonne isolation contre les bruits en particulier d'origine aérodynamique, c'est-à-dire à haute fréquence, entre 800 et 10 000 Hz.

En outre, de tels vitrages feuilletés permettent d'éviter une chute brutale à la fréquence critique des pertes par transmission (transmission loss) qui sont représentatives de l'isolement acoustique. La fréquence critique est propre à la composition du vitrage (masse volumique et module d'Young des éléments constitutifs, épaisseurs) et correspond à une coïncidence spatiale et fréquentielle des ondes de flexion dans le vitrage et des ondes acoustiques dans le fluide enveloppant le vitrage tel que l'air. Cette fréquence critique est typiquement aux environs de 4000 Hz pour un vitrage avoisinant les 3 mm d'épaisseur.

C'est à cette fréquence critique, qui est située dans la plage de fréquences particulièrement audibles par l'oreille humaine (entre 1000 et 6000 Hz), que les bruits peuvent donc être accrus. Il est donc souhaitable d'avoir une bonne performance d'isolement aux bruits à cette fréquence.

Une solution alternative (car certains vitrages ne sont pas feuilletés) ou complémentaire à l'utilisation de vitrages feuilletés à propriété d'amortissement vibro-acoustique peut consister à associer à la périphérie du vitrage et entre le vitrage et la carrosserie, un profilé à propriété d'amortissement vibro-acoustique

qui est rendu solidaire du vitrage et de la carrosserie et qui consiste en une juxtaposition ou non de plusieurs matériaux amortissants.

On entend par matériau amortissant dans la suite de la description un matériau visco-élastique présentant un facteur de perte supérieur à 0,25, qui est ainsi apte à dissiper de l'énergie. Il peut par exemple faire partie de la famille des polymères.

De la demande de brevet WO 04/012952, on connaît un profilé qui, pour assurer une telle propriété d'amortissement vibro-acoustique, doit présenter une raideur linéique réelle équivalente $K'_{eq}$ au moins égale à 25 MPa, en combinaison à un facteur de perte équivalent $\tan\delta_{eq}$ au moins égal à 0,25. La raideur linéique équivalente est la raideur équivalente du profilé rapportée à un mètre linéaire de profilé, la raideur étant caractérisée par la rigidité (principalement le module d'Young pour un travail en traction-compression) des matériaux constituant le profilé et par la géométrie du profilé.

Dans ce type de profilé, seules sont prises en compte les contraintes et déformations subies par les matériaux selon un travail en traction-compression dans la direction normale au vitrage, le travail en cisaillement étant négligeable. En effet, la carrosserie est tellement rigide par rapport au profilé qu'elle ne se déforme pas et ne peut pas absorber l'énergie vibratoire. Seul le profilé se déforme de manière significative et dissipe de l'énergie mécanique par un travail en traction compression principalement.

Ce type de profilé amortissant, constituant également le joint périphérique de collage du vitrage, convient donc car il assure la liaison entre le vitrage et la carrosserie. Cependant, tous les vitrages d'un véhicule ne sont pas fixés sur toute leur périphérie dans la carrosserie, certains tels que les vitrages latéraux ouvrants sont mobiles. Aussi cette configuration de joint de collage périphérique assurant le rôle de moyen d'amortissement ne peut pas convenir pour ces derniers vitrages.

L'invention a donc pour but d'apporter à un vitrage, plus particulièrement à haute fréquence, un moyen d'amortissement vibro-acoustique qui soit alternatif ou complémentaire aux moyens existants tels que les vitrages feuilletés ou les joints périphériques de collage d'un vitrage.

Selon l'invention, le vitrage qui est destiné à être logé dans une carrosserie comporte au moins une feuille de verre et au moins un profilé d'amortissement vibro-acoustique qui est solidarisé avec au moins l'une des faces de la feuille de verre et qui comprend au moins un élément en matériau amortissant de facteur de perte au moins égal à 0,4, et est caractérisé en ce que le profilé n'est associé à aucun autre dispositif à l'opposé de la feuille de verre, en particulier est indépendant de la carrosserie, et en ce qu'il comporte également au moins un élément pesant, qui présente une masse linéique supérieure à 0,05 kg/m et qui est solidarisé avec l'élément en matériau amortissant, la masse linéique correspondant au rapport entre la masse de l'élément pesant et la longueur dudit élément pesant selon sa plus grande extension en contact avec l'élément amortissant, l'élément en matériau amortissant étant intercalé entre la feuille de verre et l'élément pesant et présentant un module d'Young inférieur à 200 MPa à 20°C et pour les fréquences inférieures à 5000 Hz, l'élément pesant n'étant associé qu'à la face de l'élément en matériau amortissant opposée à celle en contact avec la face de la feuille de verre.

Le profilé est associé à une face du vitrage, c'est-à-dire à une surface du vitrage qui s'étend selon ses plus grandes extensions ; est donc à exclure une association avec une tranche du vitrage.

A noter que la masse linéique correspond au rapport entre la masse de l'élément pesant et la longueur dudit élément pesant en contact avec l'élément amortissant. La masse linéique peut aussi être de manière équivalente définie par le produit entre la masse volumique du matériau constituant l'élément pesant et la surface de sa section lorsque ladite section est identique selon toute la longueur de l'élément, ou si l'élément est constitué de plusieurs matériaux, la somme des produits entre la masse volumique de chaque matériau et la section de chaque matériau.

Lorsque l'élément pesant présente une section variable sur sa longueur, on préférera calculer la masse linéique par le rapport entre la masse de l'élément et sa longueur totale en contact avec l'élément amortissant.

Ainsi, le vitrage fournit des propriétés d'amortissement vibro-acoustique, quelle que soit son association avec la carrosserie du véhicule et indépendamment de la carrosserie, le matériau amortissant pouvant pleinement jouer son rôle de dissipateur de l'énergie vibratoire car agencé entre deux éléments massifs que sont le verre du vitrage et l'élément pesant du profilé.

Il est impératif que le profilé ne soit associé qu'au vitrage et soit indépendant de toute autre masse à l'opposé du vitrage. Aucun dispositif n'est associé à la partie du profilé opposée à celle associée à la feuille de verre du vitrage. En particulier, bien que le vitrage puisse au moins en partie être associé à la carrosserie pour son maintien notamment dans un logement lié à la carrosserie, le profilé solidaire du vitrage reste en revanche totalement indépendant de la carrosserie, c'est-à-dire qu'il ne touche même pas la carrosserie.

De plus, l'élément pesant ne doit être en contact qu'avec une seule face de l'élément en matériau amortissant, la face qui est opposée à celle en contact avec le vitrage.

Bien que la surface de l'élément pesant ne soit pas équivalente à la surface de la feuille de verre du vitrage, l'ensemble formé par le profilé et la feuille de verre constitue de manière inattendue un système sensiblement équivalent à un système masse-ressort-masse.

Dans un système masse-ressort-masse, la raideur du ressort peut être ajustée afin de maximiser le travail du ressort pour une certaine fréquence ciblée (résonance du système masse-ressort-masse), de manière à dissiper à cette fréquence un maximum d'énergie.

Le système de l'invention ne peut répondre strictement à la relation connue relative à la raideur d'un ressort dans un système masse-ressort-masse, mais les inventeurs ont su fournir une relation adaptée au système de l'invention dont le ressort peut être assimilé à l'élément amortissant, de manière à caractériser la raideur de l'élément amortissant.

Aussi peut-on avantageusement adapter la section s du profilé dont un côté seulement de cette section est en contact avec le vitrage et correspond à l'une des plus petites extension, tout en tenant compte du module d'Young que présente le matériau amortissant de manière à ce que la dissipation de l'énergie vibratoire par l'élément amortissant soit maximale à une fréquence particulière pour laquelle on souhaite obtenir un isolement au bruit particulièrement amélioré.

Pour dissiper avantageusement un maximum d'énergie, la section s de l'élément en matériau amortissant définie par une largeur L en contact avec le vitrage selon une des plus petites extensions et par une épaisseur e normale au vitrage, doit présenter des dimensions telles que la raideur linéique équivalente $K'_{eq}$ de l'élément amortissant vérifie, à une fréquence particulière $f_p$ ciblée le critère :

$$\frac{K'_{eq}}{\rho_v e_v \lambda_p \omega_p^2} < \frac{1}{2}$$

Où :

$$K'_{eq} = \frac{E' L}{e}$$

avec

- $E'$, le module d'Young du matériau amortissant à la fréquence $f_p$ et à 20°C ;
- L, la largeur de l'élément amortissant en contact avec le vitrage ;
- $e$, la dimension de l'élément amortissant normale au vitrage ; et où
- $\rho_v$ est la masse volumique du matériau constituant le vitrage,
- $e_v$ est l'épaisseur du vitrage,
- $\omega_p$ est la pulsation cible à la fréquence particulière $f_p$ définie par $\omega_p = 2\pi f_p$
- $\lambda_p$ est la longueur d'onde dans le vitrage correspondant à la fréquence particulière $f_p$ et définie de manière connue par :

$$\lambda_p = 2\pi \sqrt[4]{\frac{E'_v e_v^2}{12(1-\nu_v^2)\rho_v \omega_p^2}}$$

Où $E'_v$ et $\nu_v$ sont respectivement le module d'Young et le coefficient de Poisson du matériau constituant le vitrage.

De préférence, la fréquence particulière $f_p$ correspond à la fréquence critique du vitrage, ou à plus ou moins 30 % près de cette fréquence critique.

Selon une caractéristique, l'élément pesant est en contact avec une seule face de l'élément en matériau amortissant et selon la plus grande extension de l'élément amortissant.

Selon une autre caractéristique, le profilé est agencé dans une partie marginale du vitrage, notamment à proximité du bord ou au bord du vitrage, et s'étend sur au plus la longueur d'un côté du vitrage.

Plusieurs variantes de réalisation du profilé peuvent être envisagées

- le profilé comporte un seul élément en matériau amortissant et un seul élément pesant ;
- le profilé comporte plusieurs éléments en matériau amortissant qui sont juxtaposés ou non et qui s'étendent côte à côte selon leur plus grande extension, et un seul élément pesant qui couvre l'une des faces de chaque élément en matériau amortissant ;
- le profilé comporte une pluralité d'éléments pesants qui sont solidarisés à un seul élément en matériau amortissant et qui s'étendent selon la plus grande extension de l'élément amortissant en étant aboutés ou non.

L'élément pesant qui doit présenter une certaine masse linéique est choisi en fonction du ou des matériaux le constituant. Sa géométrie peut être adaptée selon en particulier la nature du matériau et l'espace disponible qui sera fourni pour le montage du vitrage dans sa destination finale. Il est au moins constitué d'une âme qui est solidarisée avec l'une des faces de l'élément en matériau amortissant et peut comporter avantageusement un renfort reliée à l'âme.

L'élément pesant peut être constitué d'un ou de plusieurs matériaux, l'ensemble des matériaux devant assurer à l'élément une masse linéique d'au moins 0,05 kg/m.

Selon une autre caractéristique, l'élément en matériau amortissant est constitué d'un ou de plusieurs matériaux amortissants qui présentent chacun un facteur de perte au moins égal à 0,4 pour assurer une dissipation d'énergie suffisante.

Bien entendu, le vitrage peut comporter plusieurs profilés de l'invention.

Selon un exemple de réalisation, le matériau amortissant est un élastomère et l'élément pesant est une plaque métallique.

Avantageusement, le vitrage de l'invention est logé dans la carrosserie d'un véhicule, notamment un véhicule automobile, le profilé étant caché à la vue.

L'invention a également pour but un procédé de fabrication d'un vitrage en vue de la réduction de la gêne acoustique et vibratoire dans un habitacle de véhicule, notamment de véhicule automobile, comportant un tel vitrage, le procédé consistant à associer au vitrage au moins un profilé d'amortissement vibro-acoustique, est caractérisé en ce que :

- on fournit un profilé comportant au moins un élément en matériau amortissant présentant un facteur de perte au moins égal à 0,4, et un module d'Young inférieur à 200 MPa à 20°C et pour les fréquences inférieures à 5000 Hz, et au moins un élément pesant de masse linéique d'au moins 0,05 kg/m solidarisé à une seule face de l'élément amortissant selon sa plus grande extension ;
- on adapte la section s de l'élément en matériau amortissant (20), définie par une largeur L en contact avec le vitrage selon sa plus petite extension et par une épaisseur *e* normale au vitrage, en fonction du module d'Young que présente le matériau amortissant de manière à ce que la raideur linéique équivalente $K'_{eq}$ de l'élément amortissant vérifie, à une fréquence particulière $f_p$ le critère :

$$\frac{K'_{eq}}{\rho_v e_v \lambda_p \omega_p^2} < \frac{1}{2}$$

Où :

$$K'_{eq} = \frac{E' L}{e}$$

avec

- *E',* le module d'Young du matériau amortissant à la fréquence $f_p$ et à 20°C ;
- *L,* la largeur de l'élément amortissant en contact avec le vitrage ;
- *e,* la dimension de l'élément amortissant normale au vitrage ; et où
- $\rho_v$ est la masse volumique du matériau constituant le vitrage,
- $e_v$ est l'épaisseur du vitrage,
- $\omega_p$ est la pulsation cible à la fréquence particulière $f_p$ définie par $\omega_p = 2\pi f_p$
- $\lambda_p$ est la longueur d'onde dans le vitrage correspondant à la fréquence à la fréquence particulière $f_p$ et définie de manière connue par :

$$\lambda_p = 2\pi \sqrt[4]{\frac{E'_v e_v^2}{12(1-\nu_v^2)\rho_v \omega_c^2}}$$

où $E'_v$ et $\nu_v$ sont respectivement le module d'Young et le coefficient de Poisson du matériau constituant le vitrage ;

- on solidarise le profilé au vitrage par la face de l'élément en matériau amortissant opposée à celle fixée à l'élément pesant, aucun autre dispositif n'étant associé au profilé.

Enfin l'invention a également trait à un procédé de protection acoustique dans un habitacle de véhicule, notamment de véhicule automobile, comportant un vitrage d'amortissement vibro-acoustique amélioré qui comprend au moins un profilé d'amortissement vibro-acoustique, caractérisé en ce qu'il consiste à utiliser un profilé comportant au moins un élément en matériau amortissant de facteur de perte au moins égal à 0,4, et de module d'Young inférieur à 200 MPa à 20°C et pour des fréquences inférieures à 5000 Hz, et au moins un élément pesant solidarisé à une seule face de l'élément amortissant selon sa plus grande extension, le profilé étant solidarisé via l'élément en matériau amortissant à l'une des faces du vitrage et à l'opposé de l'élément pesant, aucun autre dispositif que le vitrage n'étant associé au profilé, en particulier via l'élément pesant.

Pour les procédés de fabrication ou de protection acoustique, on utilisera avantageusement un vitrage de l'invention tel que décrit ci-dessus, en particulier, on adaptera la section du matériau amortissant en fonction du module d'Young que présente le matériau amortissant de sorte que la fréquence de dissipation maximale de l'élément amortissant soit ciblée sur une fréquence particulière, notamment la fréquence critique du vitrage.

Les caractéristiques du facteur de perte et du module d'Young seront de préférence mesurées à l'aide d'un viscoanalyseur.

D'autres détails et avantages de l'invention vont à présent être décrits, en regard des dessins annexés sur lesquels :

- la figure 1 est une vue en perspective d'un vitrage pourvu d'un profilé d'amortissement vibro-acoustique selon l'invention ;
- la figure 2 est une vue schématique partielle en coupe de la figure 1, le vitrage étant intégré dans une carrosserie de véhicule ;
- les figures 3 à 7 sont des vues schématiques partielles en coupe de plusieurs variantes de l'invention d'un profilé d'amortissement vibro-acoustique associé à un vitrage ;
- les figures 8 à 10 sont des vues en coupe d'autres variantes d'association de profilés selon l'invention à un vitrage ;
- la figure 11 montre des courbes comparatives d'isolement acoustique dans les hautes fréquences entre un vitrage nu et deux exemples de vitrages pourvus d'un profilé de l'invention ;
- la figure 12 montre des courbes des vitrages de la figure 11 s'étalant des basses aux hautes fréquences.

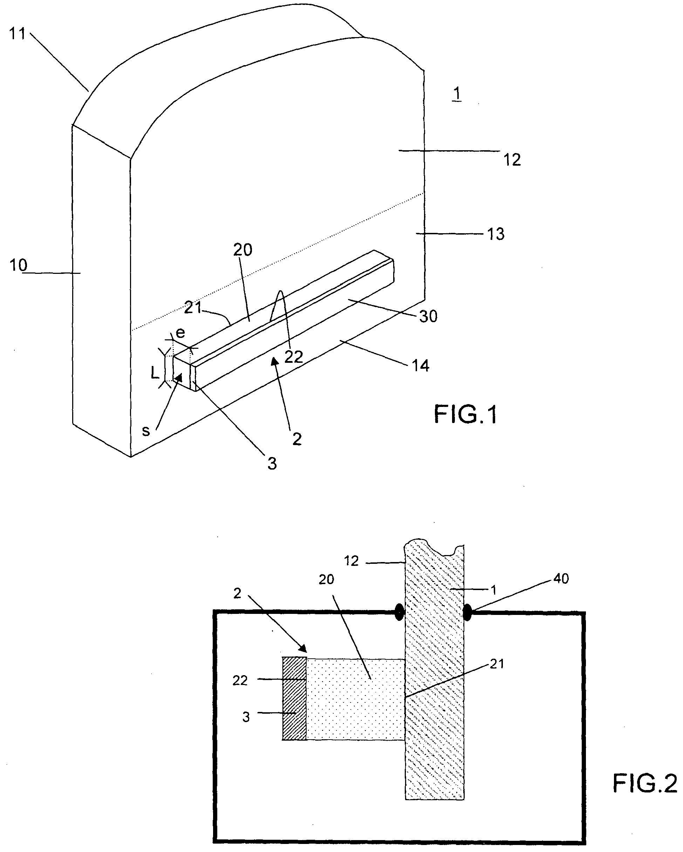

Les figures 1 à 10 ne sont pas des vues à l'échelle pour en faciliter la compréhension.

La figure 1 illustre un vitrage 1 muni des moyens d'amortissement vibro-acoustique de l'invention formés par au moins un profilé 2.

Le vitrage 1 est destiné à être logé dans une carrosserie 4 de véhicule, tel qu'un véhicule automobile, par exemple dans un caisson de portière pour former une vitre latérale (figure 2), l'étanchéité étant assurée grâce à un joint usuel 40. Ce vitrage est ici monolithique et comporte donc une feuille de verre 10, mais il pourrait par exemple être feuilleté et comprendre une feuille intercalaire plastique prise en sandwich entre deux feuilles de verre.

Le vitrage 1 présente deux faces opposées 11 et 12, l'une est destinée à être en regard de l'intérieur du véhicule, tandis que l'autre sera tournée vers l'environnement extérieur.

De plus, le vitrage 1 comporte une partie marginale 13 qui est située au niveau d'un côté 14 et délimitée par les pointillés sur la figure 1. Cette partie est appelée bande basse dans le cas d'un vitrage ouvrant latéral. Cette partie marginale est destinée à ne pas être visible car devant être logée dans la carrosserie pour la fixation du vitrage.

Le profilé 2 est logé dans cette partie marginale 13 mais reste impérativement indépendant de la carrosserie. Il est simplement rapporté contre la face de la feuille de verre du vitrage et n'est en contact avec aucun autre dispositif à l'opposé du vitrage, comme illustré sur la figure 2.

Le profilé constitue donc un dispositif rapporté contre le vitrage et indépendant de tout autre système auquel peut être associé le vitrage.

Le profilé 2 comporte un premier élément 20 en matériau amortissant et un second élément 3, nommé élément pesant, qui présente une masse linéique d'au moins 0,05 kg/m.

L'élément en matériau amortissant 20 est rendu solidaire d'une part, du vitrage par l'une de ses faces, et d'autre part, de l'élément pesant 3 par sa face opposée. L'élément pesant 3 ne présente une solidarisation avec l'élément en matériau amortissant que par une seule de ses faces et selon sa plus grande extension, cette face étant celle opposée à la face de solidarisation de l'élément en matériau amortissant avec le vitrage. L'élément pesant 3 ne présente aucune autre solidarisation que celle effective avec l'élément en matériau amortissant 20.

L'élément en matériau amortissant 20 présente un facteur de perte au moins égale à 0,4, et un module d'Young inférieur à 200 MPa, à 20°C et pour des fréquences inférieures à 5000 Hz.

En outre, l'élément amortissant 20 présente une section s qui se décompose selon au moins une dimension L en contact avec le vitrage selon la plus petite extension et une dimension *e* normale au vitrage, ces dimensions étant adaptées en fonction du module d'Young du matériau de sorte que la fréquence de dissipation maximale dudit élément soit située dans une plage de fréquences prédéfinie en rapport avec l'isolement au bruit que l'on souhaite obtenir pour ladite plage de fréquences.

La longueur n'a pas d'influence sur la fréquence de dissipation maximale, en revanche, plus le profilé sera long et plus la dissipation sera élevée. On veillera à concevoir un profilé dont la longueur qui correspond à la plus grande extension soit supérieure à la dimension L, et de préférence supérieure à au moins deux fois cette grandeur L.

Pour un élément amortissant parallélépipédique, la section s se décompose en une largeur L correspondant au côté en contact avec le vitrage, et en une épaisseur *e* correspondant au côté perpendiculaire à la largeur (figure 1).

Pour adapter ces dimensions, on fait appel à la notion de raideur linéique équivalente $K'_{eq}$ que devrait présenter l'élément amortissant à la fréquence pour laquelle on souhaite dissiper un maximum d'énergie.

Si on note $f_p$ cette fréquence particulière que l'on cible et pour laquelle on souhaite apporter un amortissement maximal, la raideur linéique équivalente $K'_{eq}$ de l'élément amortissant sera définie dans le cas d'un unique matériau par :

$$K'_{eq} = \frac{E'\,L}{e}$$

Où :

- E' est le module d'Young du matériau amortissant à la fréquence $f_p$ et à 20°C ;
- L est la largeur de l'élément amortissant en contact avec le vitrage ;
- e est la dimension de l'élément amortissant normale au vitrage.

Les inventeurs ont mis en évidence que la raideur linéique équivalente K'$_{eq}$ de l'élément amortissant devra, pour que le système soit efficace au niveau de la fréquence cible, nécessairement vérifier la condition suivante :

$$\frac{K'_{eq}}{\rho_v e_v \lambda_p \omega_p^2} < \frac{1}{2} \qquad (1)$$

Où :

- $\rho_v$ est la masse volumique du matériau constituant le vitrage,
- $e_v$ est l'épaisseur du vitrage,
- $\omega_p$ est la pulsation cible à la fréquence particulière $f_p$ définie par $\omega_p = 2\pi f_p$
- $\lambda_p$ est la longueur d'onde dans le vitrage correspondant à la fréquence particulière $f_p$ et définie de manière connue par :

$$\lambda_p = 2\pi \sqrt[4]{\frac{E'_v e_v^2}{12(1-v_v^2)\rho_v \omega_p^2}}$$

Où $E'_v$ et $v_v$ sont respectivement le module d'Young et le coefficient de Poisson du matériau constituant le vitrage.

Il se trouve que pour les véhicules, en particulier les véhicules automobiles, la plage de fréquences pour laquelle on souhaite obtenir un isolément amélioré correspond à la plage de fréquences située autour de la fréquence critique du vitrage. On choisira donc avantageusement une fréquence particulière égale, ou à plus ou moins 30% près, à la fréquence critique du vitrage (-$f_p$, = $f_c$ ou $f_c$ ±30%). C'est en effet autour de cette fréquence critique que la transmission des bruits depuis l'extérieur du véhicule, au travers du vitrage, est la plus marquée, se traduisant en termes de mesures par une chute prononcée de l'isolement acoustique. L'invention est donc plus particulièrement portée sur cette plage fréquentielle pour améliorer l'amortissement vibro-acoustique d'un vitrage. Ainsi, la fréquence particulière $f_p$ pourra plus particulièrement correspondre à la fréquence critique du vitrage.

La fréquence critique $f_c$ du vitrage dépend uniquement des propriétés du matériau le constituant et de l'épaisseur du vitrage. Sa valeur se calcule de manière connue par la formule suivante :

$$f_c = \frac{c_0^2}{2\pi} \sqrt{\frac{12\rho_v(1-v_v^2)}{E'_v e_v^2}}$$

Où $c_0$ est la célérité du son dans le fluide, généralement l'air.

L'élément amortissant 20 comprend une face 21 de solidarisation avec l'une des faces 12 du vitrage et une face opposée 22 de solidarisation avec l'élément pesant 3. A l'opposé de l'élément amortissant, l'élément pesant n'est en contact avec aucun autre dispositif.

La solidarisation sur chacune des faces est réalisée par des moyens adhésifs compatibles avec chacun des matériaux. Les moyens adhésifs sont de type connu, par exemple des moyens auto-adhésifs ou constitués d'une colle activée par apport thermique.

La solidarisation peut encore se faire par des procédés techniques adaptés lorsque l'élément amortissant et l'élément pesant sont faits dans des matériaux autorisant ces types de procédé. Il s'agit par exemple du soudage des matériaux par apport thermique.

L'élément amortissant 20 peut être constitué d'un unique matériau amortissant ou d'une juxtaposition d'une pluralité de matériaux amortissants.

Chacun des matériaux devra présenter un facteur de perte au moins égal à 0,4, et la géométrie donnée à chaque matériau sera adaptée pour répondre à la relation (1). On vérifiera alors la relation (1) en mesurant la raideur linéique équivalente de l'élément amortissant à l'aide d'un viscoanalyseur.

L'élément pesant 3 doit nécessairement être en contact avec au moins une face de l'élément amortissant selon sa plus grande extension, qui correspond à la face 22 opposée à celle 21 reposant contre le vitrage, de sorte que l'élément amortissant pris en sandwich entre deux éléments massifs, le verre du vitrage et l'élément 3, assure complètement son travail en traction-compression à la manière d'un ressort pour dissiper un maximum d'énergie.

L'élément pesant 3 présente à cet effet une masse linéique d'au moins 0,05 kg/m.

La nature massive de l'élément pesant est non seulement obtenue par la nature du matériau, mais aussi en jouant sur la géométrie de l'élément (épaisseur de l'âme solidaire du matériau amortissant et/ou addition de renforts).

Bien entendu, l'élément pesant peut être formé d'une pluralité de matériaux assurant le rôle de masse et assemblés en feuilletés par exemple, ou combinés pour former une structure géométrique particulière.

L'élément 3 illustré sur la figure 1 est formé d'une âme 30 simple ayant une épaisseur d'au moins 1 mm, telle qu'une plaque d'acier de 2 mm par exemple.

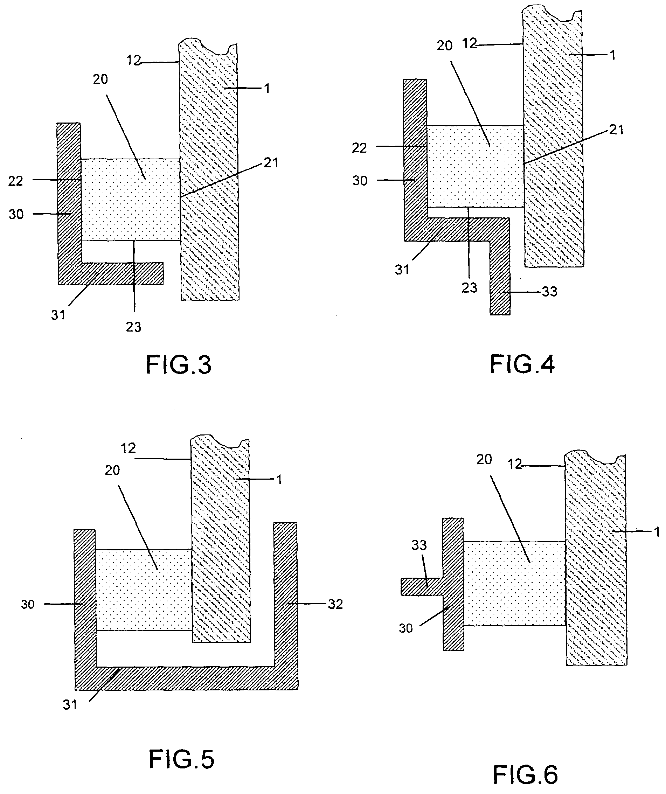

Les figures 3 à 6 montrent des variantes de forme pour l'élément rigide avec pour chacune une âme 30 solidaire de l'élément amortissant 20.

La figure 3 présente une forme en L avec une aile 31 d'extrémité perpendiculaire à l'âme 30.

La figure 4 présente une forme en L avec une aile 31 d'extrémité qui est perpendiculaire à l'âme 30, et un retour 32 qui est parallèle à l'âme 30 et de direction opposée. Le retour 32 reste en regard de la même face 12 du vitrage portant l'élément amortissant 20.

La figure 5 présente une forme en U avec une aile 31 d'extrémité qui est perpendiculaire à l'âme 30, et un retour 33 qui est parallèle et en regard de l'âme 30. L'aile 31 est suffisamment étendue de façon que le retour 33 soit disposé en regard de la face 11 du vitrage opposée à celle portant l'élément amortissant 20.

La figure 6 présente une forme en T avec une portion centrale 34 qui est perpendiculaire à l'âme 30 et opposée à la face de solidarisation avec l'élément amortissant.

Pour les variantes des figures 3, 4 et 5, l'âme 30 de l'élément pesant comporte une portion s'étendant selon une des petites extensions de l'élément amortissant, ici sous forme de l'aile 31. IPour assurer la fonction optimale d'amortissement vibratoire, cette aile n'est pas en contact avec l'élément amortissant, tel qu'illustré justement sur les figures.

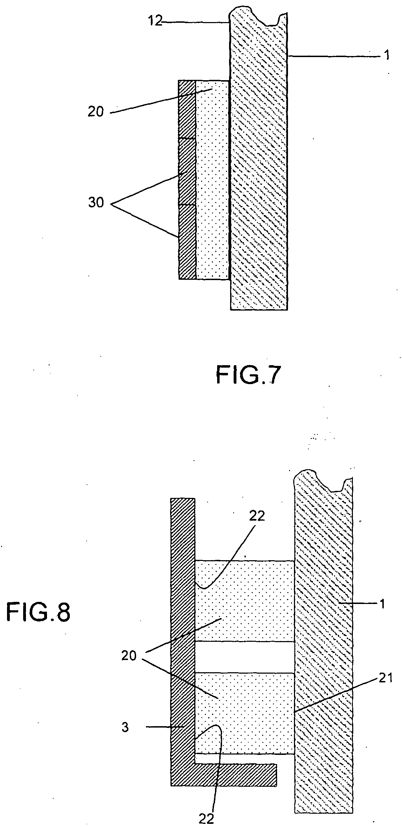

L'élément pesant 3 du profilé est unitaire tel qu'illustré sur la figure 1 en s'étendant selon la longueur de l'élément amortissant 2. Mais selon la nature du matériau de l'élément pesant et notamment la forme sous laquelle on le trouve dans le commerce, par exemple selon certaines dimensions, il est possible d'envisager une pluralité d'éléments pesants 3 qui s'étendent selon la longueur de l'élément amortissant 2 tout en étant aboutés (figure 7).

Enfin, les figures 8, 9 et 10 montrent des modes de réalisation supplémentaires des moyens amortissants.

La figure 8 illustre un profilé 2 comportant deux éléments en matériau amortissant 20 qui sont disposés l'un à côté de l'autre tout en étant écartés, et un unique élément pesant 3 de forme en L qui recouvre les faces de solidarisation 22 des deux éléments et l'espace d'écartement.

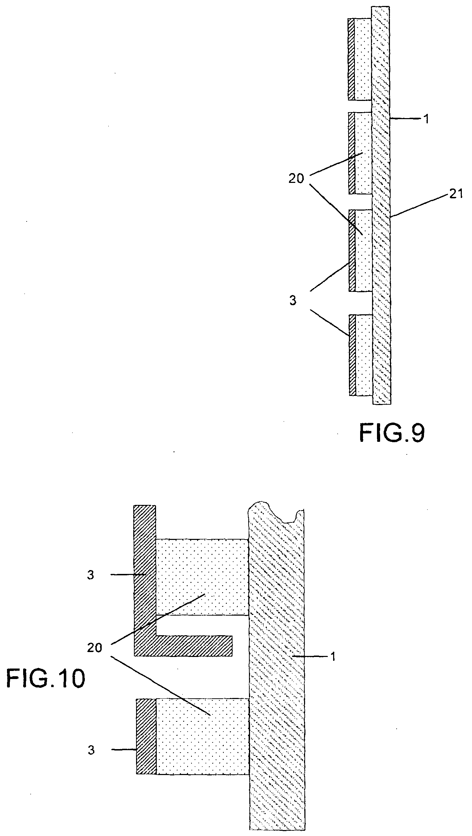

Le vitrage peut également comprendre plusieurs profilés amortissants 2 de même configuration ou non, tels que visibles respectivement sur les figures 9 et 10.

La figure 9 montre l'association de plusieurs profilés 2 correspondant à celui de la figure 1.

La figure 10 illustre l'association de deux profilés 2 correspondant respectivement au profilé de la figure 1 et de la figure 3.

Les variantes de réalisation décrites ci-dessus présentent un ou plusieurs profilés agencés sur un seul côté du vitrage, il est également envisageable de prévoir en surplus un ou des profilés sur la face du vitrage opposée, lorsque ce mode de réalisation est compatible avec l'encombrement de l'installation destinée à accueillir le vitrage.

Pour démontrer l'efficacité des moyens amortissants de l'invention, on a mis en évidence l'atténuation du niveau vibratoire d'un vitrage muni des moyens amortissants par rapport à un vitrage nu, sur une gamme de fréquences de 2500 à 10000 Hz comprenant la fréquence critique du vitrage.

Un vitrage nu excité par voie aérienne présente des niveaux vibratoires supérieurs au vitrage muni des moyens amortissants de l'invention car l'énergie vibratoire du vitrage est dissipée au travers de l'élément en matériau amortissant 20. Dès lors, les niveaux de pression dans l'habitacle sont plus faibles, et en conséquence les bruits sont atténués.

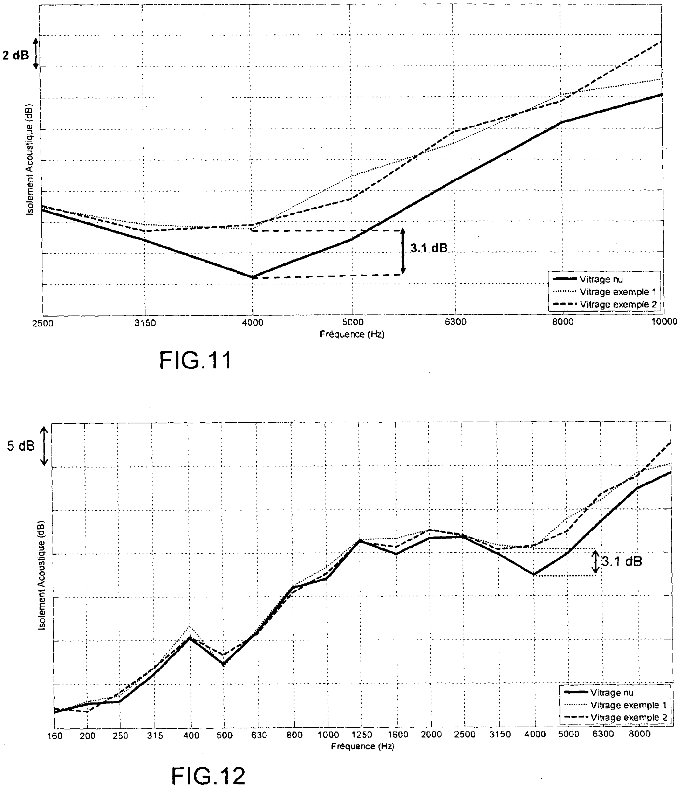

La figure 11 montre ainsi des courbes comparatives d'isolement acoustique à l'intérieur, d'une part, d'un véhicule dont l'un de ses vitrages est pourvu des moyens amortissants de l'invention, et d'autre part, d'un véhicule similaire dont le vitrage équivalent ne comporte pas les moyens de l'invention.

Le procédé pour réduire la gêne acoustique et vibratoire dans un habitacle de véhicule, en particulier de véhicule automobile, consiste donc à fournir un vitrage agrémenté d'un profilé selon l'invention.

Le véhicule utilisé pour la démonstration est une voiture de type Mégane II du constructeur automobile RENAULT.

Le vitrage servant de test correspond à une vitre ouvrante latérale en verre de portière avant, son épaisseur étant de 3,85 mm. Sa fréquence critique $f_c$ avoisine ainsi les 3100 Hz.

Deux exemples de vitrage comportant les moyens amortissants de l'invention travaillant en traction-compression ont été choisis pour les comparer avec un vitrage qui en est dépourvu.

Chaque exemple de profilé en tant que moyens amortissants présente une longueur de 0,5 m, et comprend comme élément pesant, une plaque en acier de 2 mm d'épaisseur ayant une masse linéique de 0,32 kg/m, et comme élément amortissant, un élastomère, tel que le butyle Terostat 969 commercialisé par Henkel pour l'exemple 1, et le ViscoDamp T commercialisé par ENAC pour l'exemple 2. L'élément amortissant est rendu solidaire de la plaque en acier et du vitrage par apport thermique. Le tableau ci-dessous résume les caractéristiques relatives au matériau amortissant de chaque exemple de profilé.

| | Exemple 1 à base de butyle Terostat 969 | Exemple 2 à base de ViscoDamp T |
|---|---|---|
| Module d'Young E' à 4000 Hz et à 20°C | 50 MPa | 50 MPa |
| Facteur de perte tan$\delta$ à 4000 Hz et 20°C | 1,1 | 1,6 |
| Section (*L x e*) | 5mmx6mm | 6 mm x 5,2 mm |
| $\dfrac{K'_{eq}}{\rho_v e_v \lambda_p \omega_p^2}$ | 0,1 | 0,14 |

La section *L x e* de l'élément amortissant a été choisie pour que la relation (1) décrite plus haut soit vérifiée à une fréquence particulière $f_p$ correspondant à la fréquence critique du vitrage.

Le rapport $\dfrac{K'_{eq}}{\rho_v e_v \lambda_p \omega_p^2}$ ainsi obtenu est approximativement égal à 0,1 et respecte donc le critère formulé plus haut, inférieur à 0,5.

De manière connue, le véhicule est disposé dans une salle réverbérante adaptée pour les mesures d'isolement acoustique. Le vitrage est soumis à un champ diffus tandis que les autres vitrages du véhicules sont masqués par un revêtement adéquat (septum) absorbant les ondes vibratoires de manière à minimiser les contributions de ces vitrages au rayonnement acoustique dans l'habitacle et à ne qualifier que le vitrage en test.

Les mesures d'isolement sont faites à la température ambiante de 18°C.

On met en évidence en regard des courbes de la figure 10 qu'on arrive à diminuer le trou habituellement significatif des pertes par transmission (« transmission loss ») dès la fréquence critique et au-delà de celle-ci, ici en particulier vers 4000 Hz, de sorte que l'isolement acoustique reste relativement performant à cette fréquence.

Si conformément au but premier de l'invention, on parvient à dissiper un maximum d'énergie vibratoire dans la région de la fréquence critique du vitrage (sur une plage s'étalant de moins 30% à plus 30% de la fréquence critique), l'invention permet également d'assurer un bon amortissement vibro-acoustique sur une plus large gamme de fréquences, y compris aux basses fréquences. On voit en effet sur la figure 11 que les courbes d'isolement relatives aux vitrages de l'invention sont au-dessus de la courbe correspondant au vitrage nu.

**Revendications**

**1.** Vitrage (1) à propriété d'amortissement vibro-acoustique amélioré comportant au moins une feuille de verre (10) et au moins un profilé d'amortissement vibro-acoustique (2) qui est solidarisé avec au moins l'une des faces (12) de la feuille de verre et qui comprend au moins un élément en matériau amortissant (20) de facteur de perte au moins égal à 0,4, **caractérisé en ce que** le profilé n'est associé à aucun autre dispositif à l'opposé de la feuille de verre, et **en ce que** le profilé (2) comporte également au moins un élément pesant (3) qui présente une masse linéique supérieure à 0,05 kg/m et qui est solidarisé avec l'élément en matériau amortissant (20), la masse linéique correspondant au rapport entre la masse de l'élément pesant et la longueur dudit élément pesant selon sa plus grande extension en contact avec l'élément amortissant, l'élément en matériau amortissant (20) étant intercalé entre la feuille de verre (10) et l'élément pesant (3) et présentant un module d'Young inférieur à 200 MPa à 20°C et pour les fréquences inférieures à 5000 Hz, l'élément pesant (3) n'étant associé qu'à la face de l'élément en matériau amortissant opposée à celle en contact avec la face de la feuille de verre.

**2.** Vitrage selon la revendication 1, **caractérisé en ce que** l'élément en matériau amortissant (20) présente une section s, dont un côté seulement de cette section est en contact avec le vitrage et correspond à l'une des plus petites extensions de l'élément amortissant, qui présente des dimensions adaptées en fonction du module d'Young du matériau amortissant de manière à ce que l'élément amortissant dissipe un maximum d'énergie pour une fréquence particulière.

**3.** Vitrage selon la revendication 2, **caractérisé en ce que** la section s de l'élément en matériau amortissant définie par une largeur $L$ en contact avec le vitrage et par une épaisseur $e$ normale au vitrage, présente des dimensions telles que la raideur linéique équivalente $K'_{eq}$ de l'élément amortissant vérifie, à une fréquence particulière $f_p$ ciblée le critère :

$$\frac{K'_{eq}}{\rho_v e_v \lambda_p \omega_p^2} < \frac{1}{2}$$

Où:

$$K'_{eq} = \frac{E'L}{e}$$

avec

- $E'$, le module d'Young du matériau amortissant à la fréquence $f_p$ et à 20°C ;
- $L$, la largeur de l'élément amortissant en contact avec le vitrage ;
- $e$, la dimension de l'élément amortissant normale au vitrage ; et où
- $\rho_v$ est la masse volumique du matériau constituant le vitrage,
- $e_v$ est l'épaisseur du vitrage,
- $\omega_p$ est la pulsation cible à la fréquence particulière $f_p$ définie par $\omega_p = 2\pi f_p$
- $\lambda_p$ est la longueur d'onde dans le vitrage correspondant à la fréquence particulière $f_p$ et définie de manière connue par :

$$\lambda_p = 2\pi \sqrt[4]{\frac{E'_v e_v^2}{12(1-v_v^2)\rho_v \omega_p^2}}$$

où $E'_v$ et $v_v$ sont respectivement le module d'Young et le coefficient de Poisson du matériau constituant le vitrage.

**4.** Vitrage selon la revendication 2 ou 3, **caractérisé en ce que** la fréquence particulière correspond à la fréquence critique $f_c$ du vitrage ou à une fréquence de la plage [$f_c$-0,3$f_c$ ;$f_c$+0,3$f_c$].

**5.** Vitrage selon l'une des revendications 1 à 4, **caractérisé en ce que** l'élément pesant (3) est en contact avec seulement une seule face (22) de l'élément en matériau amortissant (20) et selon la plus grande extension de l'élément amortissant.

**6.** Vitrage selon l'une des revendications 1 à 5, **caractérisé en ce que** le profilé (2) est agencé à proximité du bord ou au bord du vitrage, et s'étend sur au plus la longueur d'un côté du vitrage.

**7.** Vitrage selon l'une quelconque des revendications précédentes, **caractérisé en ce que** le profilé (2) comporte un seul élément en matériau amortissant (20) et un seul élément pesant (3).

**8.** Vitrage selon l'une des revendications 1 à 6, **caractérisé en ce que** le profilé (2) comporte plusieurs éléments en matériau amortissant (20) qui sont juxtaposés ou non et qui s'étendent côte à côte selon leur plus grande extension, et un seul élément pesant (3) qui couvre l'une des faces (22) de chaque élément en matériau amortissant.

**9.** Vitrage selon l'une quelconque des revendications précédentes, **caractérisé en ce que** le profilé (2) comporte une pluralité d'éléments pesants (3) qui sont solidarisés à un seul élément en matériau amortissant (20) et qui s'étendent selon la plus grande extension de l'élément amortissant en étant aboutés ou non.

10. Vitrage selon l'une quelconque des revendications précédentes, **caractérisé en ce que** l'élément pesant (3) est constitué d'une âme (30) qui est solidarisée avec l'une des faces (22) de l'élément en matériau amortissant (20) et comporte un renfort (34) relié à l'âme (30).

11. Vitrage selon l'une quelconque des revendications précédentes, **caractérisé en ce que** l'élément en matériau amortissant (20) est constitué d'un ou de plusieurs matériaux amortissants qui présentent chacun un facteur de perte au moins égal à 0,4.

12. Vitrage selon l'une quelconque des revendications précédentes, **caractérisé en ce que** l'élément pesant (3) est constitué d'un ou de plusieurs matériaux qui lui assurent une masse linéique d'au moins 0,05 kg/m.

13. Vitrage selon l'une quelconque des revendications précédentes, **caractérisé en ce qu'**il comporte plusieurs profilés (2).

14. Vitrage selon l'une quelconque des revendications précédentes, **caractérisé en ce que** le profilé (2) comporte au moins un élastomère comme élément amortissant et une plaque métallique comme élément pesant.

15. Vitrage selon l'une quelconque des revendications précédentes, **caractérisé en ce qu'**il est logé dans la carrosserie d'un véhicule, notamment un véhicule automobile, le profilé étant caché à la vue et indépendant de la carrosserie.

16. Procédé de fabrication d'un vitrage (1) en vue de la réduction de la gêne acoustique et vibratoire dans un habitacle de véhicule, notamment de véhicule automobile, comportant un tel vitrage, le procédé consistant à associer audit vitrage au moins un profilé d'amortissement vibro-acoustique (2), **caractérisé en ce que** :

- on fournit ledit profilé (2) comportant au moins un élément en matériau amortissant (20) présentant un facteur de perte au moins égal à 0,4, et un module d'Young inférieur à 200 MPa à 20°C et pour les fréquences inférieures à 5000 Hz, et au moins un élément pesant de masse linéique d'au moins 0,05 kg/m solidarisé à une seule face (22) de l'élément amortissant selon sa plus grande extension ;
- on adapte la section s dudit élément en matériau amortissant (20), définie par une largeur L en contact avec le vitrage selon une des plus petites extensions et par une épaisseur $e$ normale au vitrage, en fonction du module d'Young que présente le matériau amortissant de manière à ce que la raideur linéique équivalente $K'_{eq}$ de l'élément amortissant vérifie, à une fréquence particulière $f_p$ le critère :

$$\frac{K'_{eq}}{\rho_v e_v \lambda_p \omega_p^2} < \frac{1}{2}$$

Où:

$$K'_{eq} = \frac{E'L}{e}$$

avec

- $E'$, le module d'Young du matériau amortissant à la fréquence $f_p$ et à 20°C ;
- L, la largeur de l'élément amortissant en contact avec le vitrage ;
- $e$, la dimension de l'élément amortissant normale au vitrage ; et où
- $\rho_v$ est la masse volumique du matériau constituant le vitrage,
- $e_v$ est l'épaisseur du vitrage,
- $\omega_p$ est la pulsation cible à la fréquence particulière $f_p$ définie par $\omega_p = 2\pi f_p$
- $\lambda_p$ est la longueur d'onde dans le vitrage correspondant à la fréquence à la fréquence particulière $f_p$ et définie de manière connue par :

$$\lambda_p = 2\pi \sqrt[4]{\frac{E'_v\, e_v^2}{12(1-v_v^2)\rho_v \omega_p^2}}$$

où E'$_v$ et v$_v$ sont respectivement le module d'Young et le coefficient de Poisson du matériau constituant le vitrage ;

- on solidarise ledit profilé (2) audit vitrage (1) par la face (21) de l'élément en matériau amortissant (20), opposée à celle (22) fixée à l'élément pesant, aucun autre dispositif n'étant associé au profilé.

**17.** Procédé de fabrication d'un vitrage selon la revendication 16, **caractérisé en ce que** la fréquence particulière $f_p$ correspond à la fréquence critique du vitrage.

**18.** Utilisation d'un profilé (2) dans un procédé de protection acoustique dans un habitacle de véhicule, notamment de véhicule automobile, comportant un vitrage (1) d'amortissement vibro-acoustique amélioré qui comprend au moins ledit profilé (2) d'amortissement vibro-acoustique, **caractérisé en ce que** ce dernier comporte au moins un élément en matériau amortissant (20) de facteur de perte au moins égal à 0,4, et de module d'Young inférieur à 200 MPa à 20°C et pour des fréquences inférieures à 5000 Hz, et au moins un élément pesant (3) solidarisé à une seule face (22) de l'élément amortissant selon sa plus grande extension, le profilé étant solidarisé via l'élément en matériau amortissant (20) à l'une des faces (13) du vitrage et à l'opposé de l'élément pesant (3), aucun autre dispositif que le vitrage n'étant associé au profilé.

## Patentansprüche

**1.** Verglasung (1) mit verbessertem vibro-akustischem Dämpfungsvermögen mit mindestens einer Glasscheibe (10) und mindestens einem vibro-akustischen Dämpfungsprofil (2), das mit mindestens einer der Seiten (12) der Glasscheibe fest verbunden ist und das mindestens ein Element aus Dämpfungsmaterial (20) mit einem Verlustfaktor mindestens gleich 0,4 umfasst, **dadurch gekennzeichnet, dass** das Profil keiner anderen Vorrichtung zugeordnet ist, die zu der Glasscheibe entgegengesetzt ist, und dass das Profil (2) ferner mindestens ein schweres Element (3) aufweist, das eine auf die Länge bezogene Masse von mehr als 0,05 kg/m aufweist und das mit dem Element aus Dämpfungsmaterial (20) fest verbunden ist, wobei die auf die Länge bezogene Masse dem Verhältnis zwischen der Masse des schweren Elements und der Länge des schweren Elements gemäß seiner größten Ausdehnung in Kontakt mit dem Dämpfungselement entspricht, wobei das Element aus Dämpfungsmaterial (20) zwischen der Glasscheibe (10) und dem schweren Element (3) eingebracht ist und einen Young-Modul von weniger als 200 MPa bei 20 °C und bei den Frequenzen, die niedriger als 5000 Hz sind, aufweist, wobei das schwere Element (3) nur der Seite des Elements aus Dämpfungsmaterial zugeordnet ist, die zu der in Kontakt mit der Seite der Glasscheibe entgegengesetzt ist.

**2.** Verglasung nach Anspruch 1, **dadurch gekennzeichnet, dass** das Element aus Dämpfungsmaterial (20) einen Querschnitt (s) aufweist, wobei nur eine Seite dieses Querschnitts mit der Verglasung in Kontakt ist und einer der kleinsten Ausdehnungen des Dämpfungselements entspricht, die in Abhängigkeit von dem Young-Modul des Dämpfungsmaterials angepasste Maße aufweist, damit das Dämpfungselement bei einer speziellen Frequenz ein Maximum an Energie abgibt.

**3.** Verglasung nach Anspruch 2, **dadurch gekennzeichnet, dass** der Querschnitt s des Elements aus Dämpfungsmaterial, der durch eine Breite L in Kontakt mit der Verglasung und durch eine für die Verglasung normale Dicke $e$ definiert ist, derartige Maße aufweist, dass die auf die Länge bezogene äquivalente Steifigkeit $K'_{eq}$ des Dämpfungselements bei einer speziellen Zielfrequenz $fp$ das folgende Kriterium prüft:

$$\frac{K'_{eq}}{\rho_v e_v \lambda_\rho \omega_\rho^2} < \frac{1}{2}$$

wobei:

$$K'_{eq} = \frac{E'L}{e}$$

wobei

- E', der Young-Modul des Dämpfungsmaterials bei der *Frequenz fp* und bei 20 °C ist;
- L, die Breite des Dämpfungselements in Kontakt mit der Verglasung ist;
- e, das für die Verglasung normale Maß des Dämpfungselements ist und wobei
- $\rho_v$ die auf das Volumen bezogene Masse des Materials ist, aus dem die Verglasung besteht,
- $e_v$ die Dicke der Verglasung ist,
- $\omega_p$ die Zielkreisfrequenz bei der speziellen Frequenz $f_p$ ist, die definiert ist durch $\omega_p = 2\pi f_p$,
- $\lambda_p$ die Wellenlänge in der Verglasung ist, die der speziellen Frequenz entspricht und bekanntermaßen definiert ist durch

$$\lambda_\rho = 2\pi \sqrt[4]{\frac{E'_v e_v^2}{12(1 - v_v^2)\rho_v \omega_\rho^2}}$$

wobei $E'_v$ und $v_v$ der Young-Modul bzw. der Poisson-Koeffizient des Materials sind, aus dem die Verglasung besteht.

4. Verglasung nach Anspruch 2 oder 3, **dadurch gekennzeichnet, dass** die spezielle *Frequenz fp* der kritischen Frequenz $f_c$ der Verglasung oder einer Frequenz im Bereich [$f_c$ -0,3$f_c$ ;$f_c$ +0,3$f_c$] entspricht.

5. Verglasung nach einem der Ansprüche 1 bis 4, **dadurch gekennzeichnet, dass** das schwere Element (3) mit nur einer einzigen Seite (22) des Elements aus Dämpfungsmaterial (20) und gemäß der größten Ausdehnung des Dämpfungsmaterials in Kontakt ist.

6. Verglasung nach einem der Ansprüche 1 bis 5, **dadurch gekennzeichnet, dass** das Profil (2) in der Nähe des Randes oder am Rand der Verglasung vorgesehen ist und sich über höchstens die Länge einer Seite der Verglasung erstreckt.

7. Verglasung nach einem der vorhergehenden Ansprüche, **dadurch gekennzeichnet, dass** das Profil (2) ein einziges Element aus Dämpfungsmaterial (20) und ein einziges schweres Element (3) aufweist.

8. Verglasung nach einem der Ansprüche 1 bis 6, **dadurch gekennzeichnet, dass** das Profil (2) mehrere Elemente aus Dämpfungsmaterial (20) aufweist, die nebeneinander angeordnet sind und die sich gemäß ihrer größten Ausdehnung Seite an Seite erstrecken, und ein einziges schweres Element (3) aufweist, das eine der Seiten (22) jedes Elements aus Dämpfungsmaterial bedeckt.

9. Verglasung nach einem der vorhergehenden Ansprüche, **dadurch gekennzeichnet, dass** das Profil (2) eine Vielzahl schwerer Elemente (3) aufweist, die mit einem einzigen Element aus Dämpfungsmaterial (20) fest verbunden sind und die sich gemäß der größten Ausdehnung des Dämpfungselements erstrecken, indem sie zusammengefügt sind oder nicht.

10. Verglasung nach einem der vorhergehenden Ansprüche, **dadurch gekennzeichnet, dass** das schwere Element (3) von einem Kern (30) gebildet ist, der mit einer der Seiten (22) des Elements aus Dämpfungsmaterial (20 fest verbunden ist und eine Verstärkung (34) aufweist, die mit dem Kern (30) verbunden ist.

11. Verglasung nach einem der vorhergehenden Ansprüche, **dadurch gekennzeichnet, dass** das Element aus Dämpfungsmaterial (20) aus einem oder aus mehreren Dämpfungsmaterialien besteht, die jedes einen Verlustfaktor mindestens gleich 0,4 aufweisen.

12. Verglasung nach einem der vorhergehenden Ansprüche, **dadurch gekennzeichnet, dass** das schwere Element (3) aus einem oder aus mehreren Materialien besteht, die ihm eine auf die Länge bezogene Masse von mindestens 0,05 kg/m verleihen.

13. Verglasung nach einem der vorhergehenden Ansprüche, **dadurch gekennzeichnet, dass** sie mehrere Profile (2) aufweist.

14. Verglasung nach einem der vorhergehenden Ansprüche, **dadurch gekennzeichnet, dass** das Profil (2) mindestens ein Elastomer als Dämpfungselement und eine Metallplatte als schweres Element aufweist.

15. Verglasung nach einem der vorhergehenden Ansprüche, **dadurch gekennzeichnet, dass** sie in der Karosserie eines Fahrzeugs, insbesondere eines Kraftfahrzeugs, aufgenommen ist, wobei das Profil von der Sicht verborgen und unabhängig von der Karosserie ist.

16. Verfahren zum Herstellen einer Verglasung (1) zur Verringerung der Lärm- und Vibrationsbelästigung in einem Fahrgastinnenraum eines Fahrzeugs, insbesondere eines Kraftfahrzeugs, mit einer derartigen Verglasung, wobei das Verfahren darin besteht, der Verglasung mindestens ein vibro-akustisches Dämpfungsprofil (2) zuzuordnen, **dadurch gekennzeichnet, dass**

- das Profil (2) bereitgestellt wird, das mindestens ein Element aus Dämpfungsmaterial (20) aufweist mit einem Verlustfaktor mindestens gleich 0,4 und einem Young-Modul kleiner als 200 MPa bei 20 °C und bei den Frequenzen, die niedriger als 5000 Hz sind, und mindestens ein schweres Element aufweist mit einer auf die Länge bezogenen Masse von mindestens 0,05 kg/m, das mit einer einzigen Seite (22) des Dämpfungselements gemäß seiner größten Ausdehnung fest verbunden ist;
- der Querschnitt s des Elements aus Dämpfungsmaterial (20), der durch eine Breite L in Kontakt mit der Verglasung gemäß einer der kleinsten Ausdehnungen und durch eine für die Verglasung normale Dicke $e$ definiert ist, in Abhängigkeit von dem Young-Modul, den das Dämpfungsmaterial aufweist, angepasst wird, so dass die auf die Länge bezogene äquivalente Steifigkeit $K'_{eq}$ des Dämpfungselements bei einer speziellen Zielfrequenz $f_p$ das folgende Kriterium prüft:

$$\frac{K'_{eq}}{\rho_v e_v \lambda_\rho \omega_\rho^2} < \frac{1}{2}$$

wobei:

$$K'_{eq} = \frac{E'L}{e}$$

wobei

- $E'$, der Young-Modul des Dämpfungsmaterials bei der *Frequenz fp* und bei 20 °C ist;
- $L$, die Breite des Dämpfungselements in Kontakt mit der Verglasung ist;
- $e$, das für die Verglasung normale Maß des Dämpfungselements ist und wobei
- $\rho_v$ die auf das Volumen bezogene Masse des Materials ist, aus dem die Verglasung besteht,
- $e_v$ die Dicke der Verglasung ist,
- $\omega_p$ die Zielkreisfrequenz bei der speziellen Frequenz $f_p$ ist, die definiert ist durch $\omega_p = 2\pi f_p$,
- $\lambda_\rho$ die Wellenlänge in der Verglasung ist, die der speziellen Frequenz entspricht und bekanntermaßen definiert ist durch

$$\lambda_\rho = 2\pi \sqrt[4]{\frac{E'_v e_v^2}{12(1 - v_v^2)\rho_v \omega_\rho^2}}$$

wobei $E'_v$ und $v_v$ der Young-Modul bzw. der Poisson-Koeffizient des Materials sind, aus dem die Verglasung besteht,

- das Profil (2) mit der Verglasung (1) über die Seite (21) des Elements aus Dämpfungsmaterial (20), die derjenigen (22), die an dem schweren Element befestigt ist, entgegengesetzt ist, fest verbunden wird, wobei keine andere Vorrichtung dem Profil zugeordnet ist.

**17.** Verfahren zur Herstellung einer Verglasung nach Anspruch 16, **dadurch gekennzeichnet, dass** die spezielle *Frequenz fp* der kritischen Frequenz der Verglasung entspricht.

**18.** Verwendung eines Profils (2) in einem Verfahren zum Lärmschutz in einem Fahrgastinnenraum eines Fahrzeugs, insbesondere eines Kraftfahrzeugs, mit einer Verglasung (1) mit verbesserter vibro-akustischer Dämpfung, die mindestens das vibro-akustische Dämpfungsprofil (2) umfasst, **dadurch gekennzeichnet, dass** dieses letzte mindestens ein Element aus Dämpfungsmaterial (20) aufweist mit einem Verlustfaktor mindestens gleich 0,4 und einem Young-Modul kleiner als 200 MPa bei 20 °C und bei Frequenzen, die niedriger als 5000 Hz sind, und mindestens ein schweres Element (3) aufweist, das mit einer einzigen Seite (22) des Dämpfungselements gemäß seiner größten Ausdehnung fest verbunden ist, wobei das Profil über das Element aus Dämpfungsmaterial (20) mit einer der Seiten (13) der Verglasung und entgegengesetzt zu dem schweren Element (3) fest verbunden ist, wobei keine andere Vorrichtung als die Verglasung dem Profil zugeordnet ist.

**Claims**

**1.** A glazing unit (1) having improved vibro-acoustic damping properties comprising at least one glass sheet (10) and at least one vibro-acoustic damping strip (2), which is fastened onto at least one of the faces (12) of the glass sheet and which comprises at least one element (20) made of damping material having a loss factor of at least 0.4, **characterized in that** the strip is joined to no other device on the opposite side of the glass sheet and **in that** the strip (2) also includes at least one weighting element (3) that has a linear mass of greater than 0.05 kg/m and is fastened onto the element (20) made of damping material, the linear mass corresponding to the ratio of the mass of the weighting element to the length of said weighting element along its greatest extent in contact with the damping element, the element (20) made of damping material being inserted between the glass sheet (10) and the weighting element (3) and having a Young's modulus of less than 200 MPa at 20°C for frequencies below 5000 Hz, the weighting element (3) being joined only to the face of the element made of damping material which is on the opposite side from that in contact with the face of the glass sheet.

**2.** The glazing unit as claimed in claim 1, **characterized in that** the element (20) made of damping material has a cross section s, only one side of this section being in contact with the glazing unit and corresponding to one of the shortest extents of the damping element, which has suitable dimensions so that, according to the Young's modulus of the damping material, the damping element dissipates the maximum amount of energy for a particular frequency.

**3.** The glazing unit as claimed in claim 2, **characterized in that** the cross section s of the element made of damping material, defined by a length L in contact with the glazing unit and by a thickness *e* normal to the glazing unit, has dimensions such that the equivalent linear stiffness $K'_{eq}$ of the damping element satisfies, at a very targeted particular frequency $f_p$, the criterion:

$$\frac{K'_{eq}}{\rho_v e_v \lambda_p \omega_p^2} < \frac{1}{2}$$

where:

$$K'_{eq} = \frac{E' L}{e}$$

in which:

- *E'* is the Young's modulus of the damping material at 20°C and at the frequency $f_p$;
- *L* is the width of the damping element in contact with the glazing unit;
- *e* is the dimension of the damping element normal to the glazing, and in which:
- $\rho_v$ is the density of the material of which the glazing unit is made;
- $e_v$ is the thickness of the glazing unit;
- $\omega_p$ is the target angular frequency at the particular frequency $f_p$ defined by $\omega_p = 2\pi f_p$; and
- $\lambda_p$ is the wavelength in the glazing unit corresponding to the particular frequency $f_p$ and defined in a known manner by:

$$\lambda_p = 2\pi \sqrt[4]{\frac{E'_v e_v^2}{12(1-v_v^2)\rho_v \omega_p^2}}$$

and in which $E'_v$ and $v_v$ are the Young's modulus and the Poisson's ratio of the material of which the glazing unit is made, respectively.

4. The glazing unit as claimed in claim 2 or 3, **characterized in that** the particular frequency corresponds to the critical frequency $f_c$ of the glazing unit or to a frequency within the $[f_c$-$0.3f_c;f_c$+$0.3f_c]$ range.

5. The glazing unit as claimed in one of claims 1 to 4, **characterized in that** the weighting element (3) is in contact with only a single face (22) of the element (20) made of damping material and along the greatest extent of the damping element.

6. The glazing unit as claimed in one of claims 1 to 5, **characterized in that** the strip (2) is placed close to the edge or at the edge of the glazing unit and extends over at most the length of one side of the glazing unit.

7. The glazing unit as claimed in any one of the preceding claims, **characterized in that** the strip (2) comprises a single element (20) made of damping material and a single weighting element (3).

8. The glazing unit as claimed in claims 1 to 6, **characterized in that** the strip (2) comprises a plurality of elements (20) made of damping material, which may or may not be juxtaposed and which extend side by side along their largest extents, and a single weighting element (3) which covers one of the faces (22) of each element made of damping material.

9. The glazing unit as claimed in any of the preceding claims, **characterized in that** the strip (2) comprises a plurality of weighting elements (3) that are fastened onto a single element (20) made of damping material and which extend along the largest extent of the damping element, which weighting elements may or may not abut one another.

10. The glazing unit as claimed in any of the preceding claims, **characterized in that** the weighting element (3) is constituted of a web (30) which is fastened onto one of the faces (22) of the element (20) made of damping material and includes a reinforcement (34) jointed to the web (30).

11. The glazing unit as claimed in any of the preceding claims, **characterized in that** the element (20) made of damping material is constituted of one or more damping materials, each having a loss factor of at least 0.4.

12. The glazing unit as claimed in any of the preceding claims, **characterized in that** the weighting element (3) is constituted of one or more materials giving it a linear mass of at least 0.05 kg/m.

13. The glazing unit as claimed in any one of the preceding claims, **characterized in that** it has several strips (2).

14. The glazing unit as claimed in any of the preceding claims, **characterized in that** the strip (2) comprises at least an elastomer as damping element and a metal plate as weighting element.

15. The glazing unit as claimed in any of the preceding claims, **characterized in that** it is housed in the body of a vehicle, especially of an automobile, the strip being hidden from view and independent of the body.

16. A method of manufacturing a glazing unit (1) for the purpose of reducing acoustic and vibratory nuisance in a passenger compartment of a vehicle, especially an automobile, comprising such a glazing unit, the method consisting in joining at least one vibro-acoustic damping strip (2) to said glazing unit, **characterized in that**:

  - a strip (2) comprising at least one element (20) made of damping material having a loss factor of at least 0.4 and a Young's modulus at 20°C of less than 200 MPa, for frequencies below 5000 Hz, and at least one weighting element having a linear mass of at least 0.05 kg/m fastened onto only one face (22) of the damping element along its greatest extent are provided:
  - the cross section s of said element (20) made of damping material is adapted, said section being defined by a length $L$ in contact with the glazing unit along one of its shortest extents and by a thickness $e$ normal to the glazing unit, according to the Young's modulus of the damping material, such that the equivalent linear stiffness $K'_{eq}$ of the damping element satisfies, at a targeted particular frequency $f_p$, the criterion:

$$\frac{K'_{eq}}{\rho_v e_v \lambda_p \omega_p^2} < \frac{1}{2}$$

where:

$$K'_{eq} = \frac{E'L}{e}$$

in which:

- $E'$ is the Young's modulus of the damping material at 20°C and at the frequency $f_p$;
- $L$ is the width of the damping element in contact with the glazing unit;
- $e$ is the dimension of the damping element normal to the glazing, and in which:
- $\rho_v$ is the density of the material of which the glazing unit is made;
- $e_v$ is the thickness of the glazing unit;
- $\omega_p$ is the target angular frequency at the particular frequency $f_p$ defined by $\omega_p = 2\pi f_p$; and
- $\lambda_p$ is the wavelength in the glazing unit corresponding to the particular frequency $f_p$ and defined in a known manner by:

$$\lambda_p = 2\pi \sqrt[4]{\frac{E'_v e_v^2}{12(1 - v_v^2)\rho_v \omega_p^2}}$$

and in which $E'_v$ and $v_v$ are the Young's modulus and the Poisson's ratio of the material of which the glazing unit is made, respectively; and

- said strip (2) is fastened onto said glazing unit (1) via the face (21) of the element (20) made of damping material on the opposite side of the face (22) fixed to the weighting element, no other device being joined to the strip.

17. The method of manufacturing a glazing unit as claimed in claim 16, **characterized in that** the particular frequency $f_p$ corresponds to the critical frequency of the glazing unit.

18. Use of a strip (2) in an acoustic protection method in a passenger compartment of a vesicle, especially of an automobile, comprising a glazing unit (1) of improved vibro-acoustic damping which comprises at least said vibro-acoustic damping strip (2), **characterized in that** this latter comprises at least one element (20) made of damping material having a loss factor of at least 0.4 and a Young's modulus of less than 200 MPa at 20°C for frequencies below 5000 Hz, and at least one weighting element (3) fastened onto a single face (22) of the damping element along its greatest extent, the strip being fastened via the element (20) made of damping material onto one of the faces (13) of the glazing unit on the opposite side from the weighting element (3), no device other than the glazing unit being joined to the strip.

FIG.1

FIG.2

FIG.3

FIG.4

FIG.5

FIG.6

FIG.7

FIG.8

FIG.9

FIG.10

FIG.11

FIG.12

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 10337007
- FR 2877881
- EP 0387148 B1
- WO 04012952 A